# EUROPEAN PATENT APPLICATION

(11) **EP 1 800 732 A1**
(43) Date of publication of application: **27.06.2007**
(21) Application number: 05112606.8
(22) Date of filing: 21.12.2005
(51) Int. Cl.: B01D 53/18, B01D 53/78

(54) **Bubbling bed reactor and a method of separating a gaseous pollutant from a gas**

(71) Applicant: Alstom Technology Ltd, 5401 Baden (CH)
(72) Inventor: Håkansson, Rikard, 352 51, VÄXJÖ (SE)
(74) Representative: Hjalmarsson, Magnus Axel

(57) **Abstract**

A device for separating a gaseous pollutant from a gas comprises an apertured plate (8) which allows passage from below of gas containing the gaseous pollutant and which carries, on its upper surface (12), a flowing layer (14) of absorption liquid. A fixed barrier (76) is located at an outlet zone (68) and extends vertically upwards from the apertured plate (8). A controllable throttle means (80) is located above said fixed barrier (76) and is adapted to control the resistance which the flowing layer (14) of the absorption liquid has to overcome in order to pass the fixed barrier (76).

The separation of the gaseous pollutant can be adjusted by adjusting the thickness (T) of the flowing layer (14) of the absorption liquid by setting the throttle means (80) to a position that provides a suitable resistance.

## Description

### Field of the invention

The present invention relates to device for separating gaseous pollutants, such as sulphur dioxide, from a gas by means of an absorption liquid, said device comprising
a) an inlet for gas containing at least one gaseous pollutant and an outlet for gas, from which said at least one gaseous pollutant has been separated,
b) an essentially horizontal apertured plate which is mounted between the inlet and the outlet and which is arranged to allow passage from below of gas containing said at least one gaseous pollutant and to carry, on its upper surface, a flowing layer of the absorption liquid,
c) an inlet zone, which is adapted for distributing absorption liquid over the apertured plate to form the flowing layer of the absorption liquid, and
d) an outlet zone, which is adapted to receive the flowing layer of the absorption liquid after it has passed over the apertured plate.

The present invention also relates to a method of separating a gaseous pollutant, such as sulphur dioxide, from a gas by means of an absorption liquid.

### Background of the invention

Combustion of coal, oil, natural gas, industrial waste, domestic waste, peat etc. produces flue gases that may contain gaseous pollutants, such as sulphur dioxide, hydrofluoric acid, bromine and hydrochloric acid. Gaseous pollutants, such as sulphur dioxide, can also be produced as a residual product in chemical processes, for instance in metallurgical processes. Lately carbon dioxide, CO₂, has also been noticed as a gaseous pollutant due to its negative effects on the environment. To avoid emitting large quantities of gaseous pollutants into the atmosphere a gas cleaning device is normally used for separating, at least partly, the gaseous pollutants before emitting the gas into the atmosphere.

WO 2005/007274 to Alstom Technology Ltd describes a method and a device for removing sulphur dioxide from a gas. The flue gas is passed upwards through an apertured plate with a flowing layer of an absorption liquid provided thereon. The absorption liquid may contain, for instance, water and one or more of the substances lime, limestone, dolomite, sodium hydroxide solution and similar substances, which are suitable for absorption of sulphur dioxide. The absorption efficiency of the flowing layer depends on its thickness. In one embodiment shown in WO 2005/007274 a valve is provided in an outlet zone and is located just below the level of the apertured plate. The purpose of the valve is to control the thickness of the flowing layer of the absorption liquid on the apertured plate. It has been found, however, that the valve is not very effective for controlling the flowing layer and that the flowing layer often becomes quite unstable.

### Summary of the invention

An object of the present invention is to provide a device for cleaning gases, which device is provided with means for controlling, in a more stable manner compared to the prior art, the thickness of a flowing layer of absorption liquid.

This object is achieved by a device according to the preamble and characterised in that the device further comprises
e) a fixed barrier located at the outlet zone and extending vertically upwards from the apertured plate, and
f) a controllable throttle means located above said fixed barrier and adapted to control the resistance which the flowing layer of the absorption liquid has to overcome in order to pass the fixed barrier.

An advantage of this invention is that the combination of the fixed barrier and the controllable throttle means makes it is easier to accurately control the thickness of the flowing layer of the absorption liquid. A further advantage is that the flowing layer will not be drained at quick load reductions. Thus the present invention provides for a device which works better at varying loads.

According to a preferred embodiment the fixed barrier is shaped as a plate extending vertically upwards from an edge of the apertured plate. An advantage of this embodiment it that the fixed barrier shaped as a plate takes little space and is yet effective for its purpose. By extending from the edge of the apertured plate the area of the apertured plate being effective for separation is not reduced.

Preferably the fixed barrier extends to a height of at least 50 mm, still more preferably at least 75 mm, above the upper surface of the apertured plate. This height above the upper surface has proven to provide a suitable minimum thickness of the flowing layer of the absorption liquid such that, at all operating modes, a proper operation of the device can be achieved.

According to a preferred embodiment the throttle means comprises a throttle plate which is adapted to be turned around a horizontal axis. The throttle plate provides for simple, yet effective, stable and quick control of the thickness of the flowing layer of the absorption liquid.

More preferably said horizontal axis is located at a distance from an upper edge of the fixed barrier, opening of the throttle plate resulting in forming a gap between the upper edge of the fixed barrier and the throttle plate. An advantage of this embodiment is that a very accurate control with a quick response to changes in the setting of the throttle means is achieved. For a plant which may operate rather often in a wide load range of 20-100% and with quick load changes this embodiment provides for quickly adapting the thickness of the flowing layer of absorption liquid to the present load.

Still more preferably said horizontal axis is located vertically above the upper edge of the fixed barrier. This provides for a very compact design of the device since the installation of the throttle means takes up little space.

According to another preferred embodiment said horizontal axis is located on an upper edge of the fixed barrier. An advantage of this embodiment is that the control of the thickness of the flowing layer is very accurate and calm, in particular around the maximum thickness. For a plant which often operates in the load range of 90-100% and which seldom experiences quick load changes this embodiment provides for a very accurate fine tuning of the thickness of the flowing layer of absorption liquid.

Preferably the throttle plate is provided with a horizontal edge over which the absorption liquid is adapted to flow, the horizontal edge being selected among straight edges and toothed edges. These types of edges have proven to provide even outflow characteristics for the liquid flowing over the horizontal edge.

Preferably the fixed barrier is provided with an upper edge, over which the absorption liquid is adapted to flow, the upper edge being selected among straight edges and toothed edges. For the same reasons as stated above such an edge provides for even outflow characteristics.

A further object of the present invention is to provide a method of separating gaseous pollutants from a gas with improved control of the separating performance of a flowing layer of absorption liquid.

This object is achieved by a method of separating at least one gaseous pollutant, such as sulphur dioxide, from a gas by means of an absorption liquid, in which method the gas is conveyed upwards through a substantially horizontal apertured plate on which a flowing layer of the absorption liquid is conveyed from an inlet zone to an outlet zone, the method being characterised in that the flowing layer of the absorption liquid passes a fixed barrier which is provided at the outlet zone and extends vertically upwards from the apertured plate, the separation of said at least one gaseous pollutant being controlled by adjusting the thickness of the flowing layer of the absorption liquid by setting a throttle means, which is located above said fixed barrier, to a position that provides a suitable resistance which the flowing layer of the absorption liquid has to overcome in order to pass the fixed barrier.

An advantage of this method is that it has proven to provide a separation method in which the separation characteristics of the flowing layer of absorption liquid can be accurately controlled within a wide load range.

According to a preferred embodiment of the method the separation of said at least one gaseous pollutant is further controlled by controlling the liquid flow rate at which the absorption liquid is passed over the upper surface of the apertured plate. An advantage of this embodiment is that controlling both the thickness of the flowing layer of absorption liquid and the flow rate at which the absorption liquid flows over the upper surface of the apertured plate provides additional possibilities for adapting the properties of the flowing layer of absorption liquid to the present gas conditions, i.e. the gas flow and the concentration of said at least one gaseous pollutant in the gas. This makes it possible to save energy by decreasing flue gas pressure drop and/or decreasing power consumption in a pumping device supplying the absorption liquid to an inlet zone from which it is distributed over the upper surface of the apertured plate.

Further objects and features of the present invention will be apparent from the description and the claims.

### Brief description of the drawings

The invention will now be described in more detail with reference to the appended drawings in which:
Fig. 1 is a sectional view in the horizontal plane and schematically illustrates a device according to the invention.
Fig. 2 is a sectional view in the vertical plane and shows section II-II in Fig. 1.
Fig. 3 is a sectional view in the vertical plane and shows section III-III in Fig. 1.
Fig. 4 is a sectional view in the vertical plane and shows section IV-IV in Fig. 1.
Fig. 5a is an enlarged sectional view and shows the area Va of Fig. 4.
Fig. 5b is an enlarged sectional view and shows a level control means of Fig. 5a in a second operating mode.
Fig. 6a is an enlarged sectional view and shows a level control means according to a second embodiment of the invention.
Fig. 6b is an enlarged sectional view and shows the level control means of Fig. 6a in a second operating mode.
Fig. 7a is an enlarged sectional view and shows a level control means according to a third embodiment of the invention.
Fig. 7b is an enlarged sectional view and shows the level control means of Fig. 7a in a second operating mode.
Fig. 7c is an enlarged sectional view and shows the level control means of Fig. 7a in a third operating mode.
Fig. 8a is a partial side view and shows a throttle means and a fixed barrier as seen along the arrow VIIIa of Fig. 7c.
Fig. 8b is a partial side view and shows a throttle means and a fixed barrier according to a further embodiment of the invention.
Fig. 8c is a partial side view and shows a throttle means and a fixed barrier according to a still further embodiment of the invention.

### Description of preferred embodiments

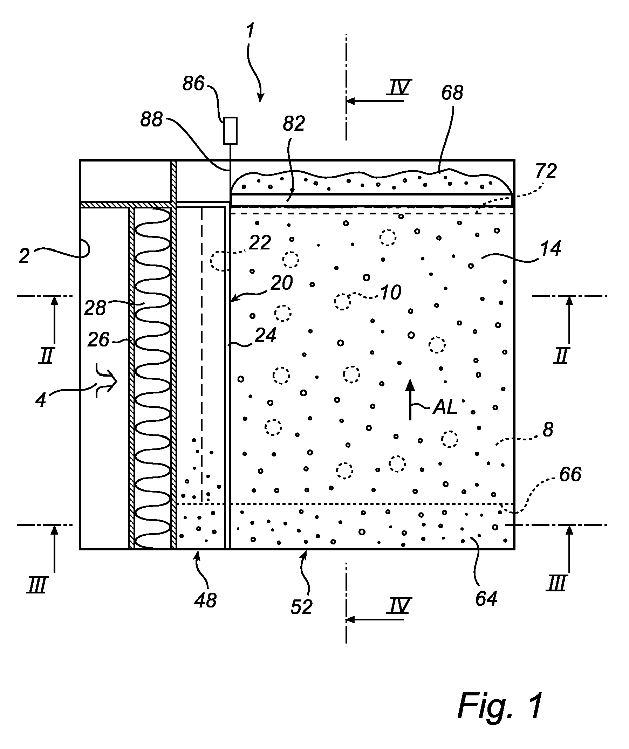

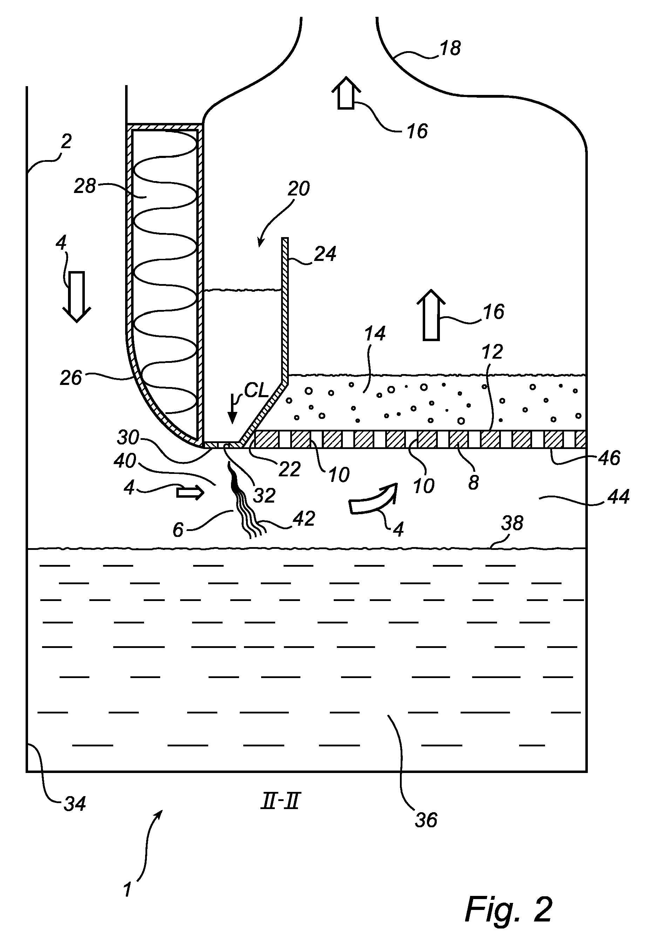

Fig. 1 shows schematically a device 1 according to the present invention. The device 1 has an inlet 2 for flue gas 4 from a boiler (not shown). As is best seen in Fig. 2, the flue gas 4 is in a first step passed through a contact zone 6. In the contact zone 6 the flue gas 4 is mixed with a liquid in such a manner that the gas is cooled and essentially saturated with water vapour by part of the liquid being evaporated. Further a limited separation of gaseous pollutants from the flue gas 4 may occur in the contact zone 6. The flue gas 4 is then passed on to a horizontal rectangular apertured plate 8. The apertured plate 8 has a number of evenly distributed holes 10, through which the flue gas 4 can pass. On its upper surface 12 the apertured plate 8 carries a flowing layer 14 of an aqueous absorption liquid. As the flue gas 4 passes through the flowing layer 14 of absorption liquid, a gaseous pollutant in the form of sulphur dioxide is efficiently separated from the flue gas 4.

The cleaned flue gas 16 leaves the device 1 through an outlet 18 for cleaned flue gas 16.

The contact zone 6 is supplied with liquid from an elongate outlet box 20. The outlet box 20, which extends along a first lateral edge 22 of the apertured plate 8 and is open upwards, has an elongate side wall 24 which separates the outlet box 20 from the flowing layer 14 of absorption liquid. The outlet box 20 is defined towards the gas inlet 2 by an elongate double-walled guide rail 26 which is provided with insulation 28 for preventing liquid condensation in the gas inlet 2. The outlet box 20 has a bottom 30 which is provided with distributing means in the form of nozzles 32. The nozzles 32 are adapted to distribute liquid, which is indicated by an arrow CL in Fig. 2 and which flows down towards the bottom 30 and out of the outlet box 20, in the contact zone 6 and thus contact the liquid with the flue gas 4 which is conducted horizontally under the bottom 30 of the outlet box 20.

A portion of the liquid which flows out of the outlet box 20 is not evaporated but is collected in a container 34. The liquid 36 in the container 34 has a liquid surface 38 which extends under essentially the entire apertured plate 8 and also under essentially the entire outlet box 20. Between the bottom 30 of the outlet box 20 and the liquid surface 38 there is a passage in the form of a gap 40 through which the flue gas 4 can pass. The flue gas 4 will entrain part of the liquid 42 that is distributed by the nozzles 32 into the space 44 formed between the liquid surface 38 and a lower surface 46 of the apertured plate 8. The entrained liquid will wet the lower surface 46 of the apertured plate 8 and reduce the risk of incrustations on the lower surface 46.

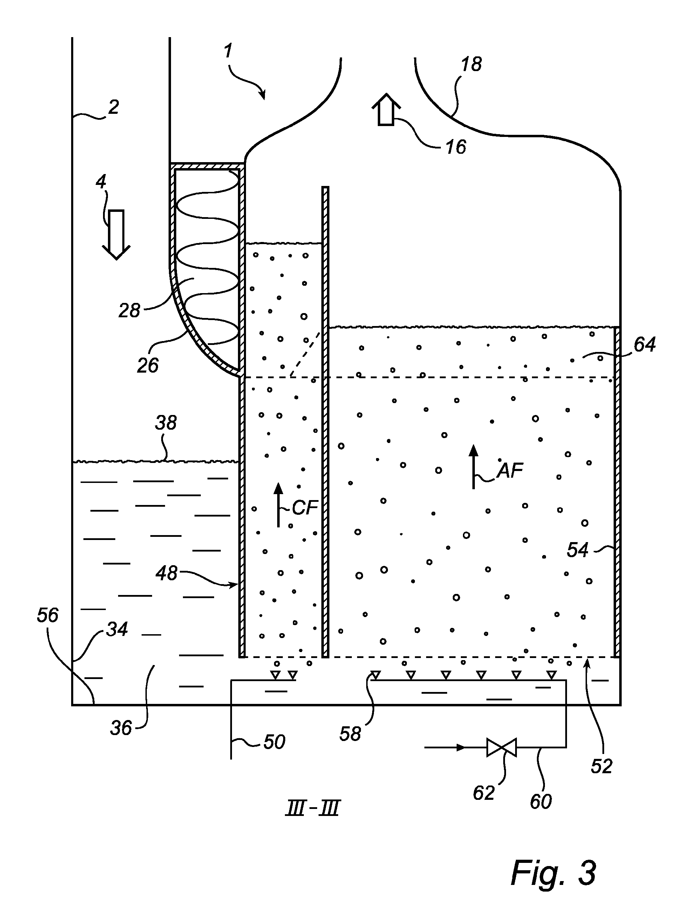

Fig. 3 shows a first pumping means in the form of a first mammoth pump 48. The mammoth pump 48 is provided with compressed air via a pipe 50 and supplies the outlet box 20 with a liquid flow CF in a similar manner as is described in WO 2005/007274. This upward liquid flow CF will reach the outlet box 20 and will be distributed in the same and then flow out in the contact zone 6, as described above.

As shown in Fig. 3, the device 1 also has a second pumping means in the form of an elongate second mammoth pump 52. The mammoth pump 52 has a vertical tube 54 which extends vertically upwards from a level just above the bottom 56 of the container 34 to the upper surface 12 of the apertured plate 8. The mammoth pump 52 has a number of air nozzles 58 which are arranged vertically under the tube 54 and which through a conduit 60, on which a control valve 62 is arranged, are supplied with compressed air. The compressed air lowers the density of the liquid 36 and provides an upward liquid flow, indicated by an arrow AF, in the tube 54. This upward liquid flow will reach an inlet zone 64 from which the absorption liquid is distributed over the upper surface 12 for forming the flowing layer 14 of absorption liquid flowing horizontally over the apertured plate 8.

The liquid 36 is an absorption liquid which essentially consists of a mixture of limestone, which is supplied to the container 34 from a storage (not shown) of a limestone suspension, and water and also gypsum and calcium sulphite formed in the separation of sulphur dioxide from the flue gas 4. The absorption liquid 36 can be prepared, for instance, according to the manner described in WO 96/00122.

The valve 62, which is located on the conduit 60 supplying the mammoth pump 52 with pressurized air, can used to adjust the absorption liquid flow rate according to the flow rate of the flue gas 4 and the sulphur dioxide concentration of the flue gas 4, as will be further described below. The pressurized air supplied to the mammoth pump 52 requires power for its generation. A high flow rate of the absorption liquid requires a large amount of compressed air and thus results in a large power consumption.

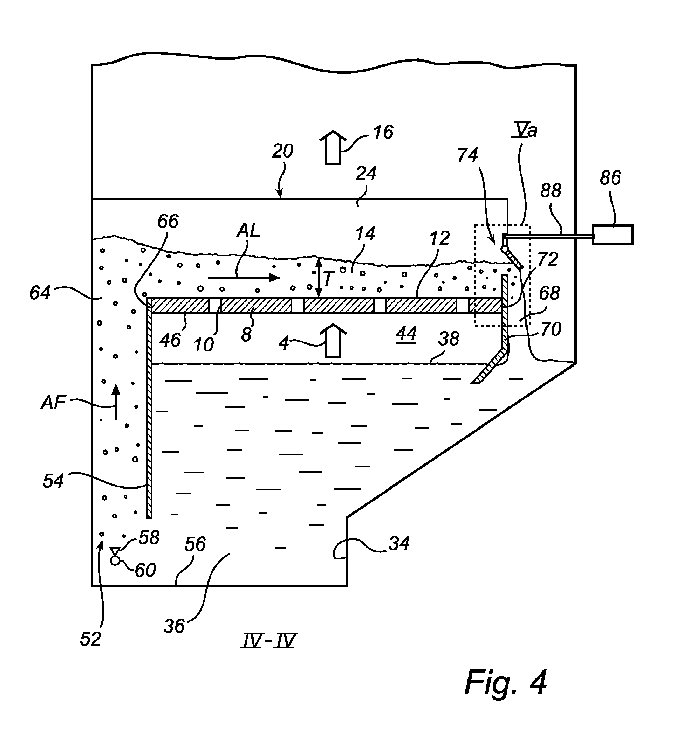

Fig. 4 shows how the elongate mammoth pump 52 is arranged along a second lateral edge 66 of the rectangular apertured plate 8, which second lateral edge 66 forms a right angle to the first lateral edge 22 and hence also to the longitudinal direction of the outlet box 20. Thus, the first mammoth pump 48 and the second mammoth pump 52 are arranged in succession along a line parallel to the second lateral edge 66, which is also evident from Fig. 1.

It is also evident from Fig. 4 how the flowing layer 14 of absorption liquid is passed horizontally over the apertured plate 8 from the inlet zone 64 to an outlet zone 68 in a direction, indicated by an arrow AL, that is parallel to the longitudinal direction of the elongate outlet box 20.

A guide rail 70 is attached to a third lateral edge 72 opposite to the second lateral edge 66. The guide rail 70 extends from the apertured plate 8 and down under the liquid surface 38 in order to prevent the flue gas 4 from passing beside the apertured plate 8. Absorption liquid that has flown over the apertured plate 8 will, at the outlet zone 68, flow downwards and be collected in the container 34.

The load on the device 1 may change, for example due to varying load in the boiler or due to varying content of sulphur in the fuel that is combusted. In order to obtain an accurate separation of sulphur dioxide at the varying loads the device 1 is provided with a level control means 74 for controlling the thickness T of the flowing layer 14 of absorption liquid.

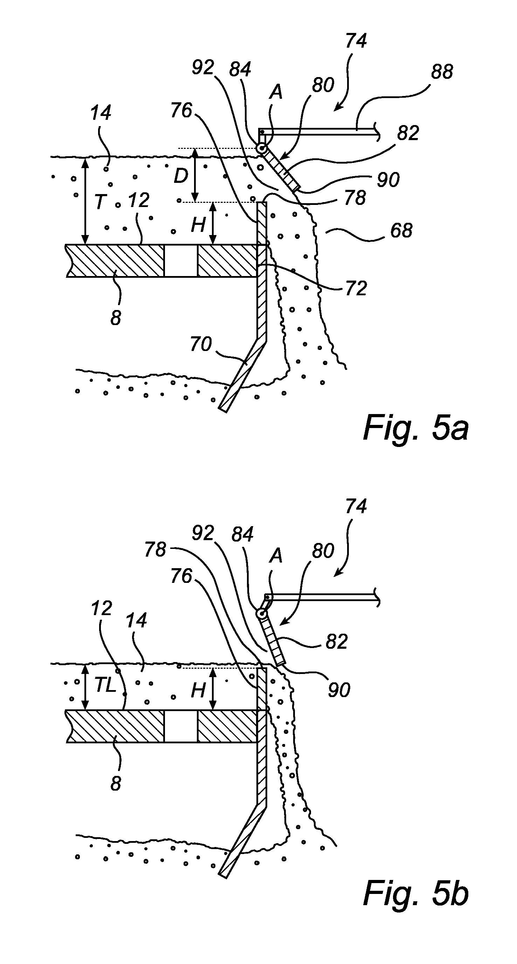

Fig. 5a illustrates the level control means 74 in more detail. As can be seen from Fig. 5a the level control means 74 comprises a fixed barrier 76 which is shaped as a plate and is located at the outlet zone 68. The fixed barrier 76 extends vertically upwards from the apertured plate 8 at the third lateral edge 72 thereof. The fixed barrier 76 extends a height H above the upper surface 12 of the apertured plate 8. The height H of the fixed barrier 76 is preferably at least 50 mm, still more preferably about 75-350 mm. The fixed barrier 76 has an upper edge 78 over which the absorption liquid may flow. In the case shown in Fig. 5a the upper edge 78 is a straight, horizontal edge. The level control means 74 further comprises a controllable throttle means 80 which is located above the fixed barrier 76. The throttle means 80 comprises a throttle plate 82 which is fixed to a horizontal shaft 84, which may be turned around a horizontal axis A. The horizontal shaft 84 is provided with bearings, not shown, at both of its ends. The horizontal axis A is located vertically above the upper edge 78 and at a distance D above the edge 78. Typically the distance D is 100-500 mm. A throttle control motor 86, which is shown in Figs. 1 and 4, controls, via a control bar 88, the turning of the throttle plate 82. The throttle plate 82 has a horizontal lower edge 90. Between the upper edge 78 of the fixed barrier 76 and the lower edge 90 of the throttle plate 82 a gap 92 is formed. By adjusting the degree of turning of the shaft 84 by means of the motor 86 it is possible to set the width of the gap 92. The resistance, in the form of liquid pressure drop, that the flowing layer 14 of absorption liquid has to overcome in order to pass the fixed barrier 76 depends on the width of the gap 92. By making the gap 92 narrow the resistance, i.e. the liquid pressure drop, will increase and thus a higher thickness T of the layer 14 is obtained. Thus it is possible to control the thickness T of the flowing layer 14 of absorption liquid by setting the gap 92 to an appropriate width.

Fig. 5b illustrates the situation when the flow rate of the flowing layer 14 of absorption liquid has been drastically reduced. With such a low load it is difficult to accurately control the thickness T of the layer 14 by means of the throttle means 80. However the fixed barrier 76 ensures that the layer 14 has a minimum thickness TL, which is equal to H, or only slightly higher than H, which minimum thickness is always maintained, also at a low load. Thus the risk that the layer 14 gets a too low thickness, such that the layer 14 would not have proper absorption properties and/or that the layer 14 would even disappear from certain areas of the upper surface 12, is avoided.

By controlling the level control means 74 to provide a desired resistance in the gap 92 and also, preferably simultaneously, controlling the valve 62 of the mammoth pump 52 to obtain a desired absorption liquid flow rate, according to the arrow AF of Fig. 3 and the arrow AL of Figs 1 and 4, it is possible to obtain a desired combination of a horizontal flow rate, in m³/s, at which the flowing layer 14 of the absorption liquid flows over the upper surface 12 of the apertured plate 8, with a thickness T that the layer 14 has when it flows over the surface 12. The combination of the horizontal flow rate, in m³/s, over the surface 12 and the thickness T can thus be controlled to match each combination of flue gas flow rate and sulphur dioxide concentration in the flue gas such that pressure drop in the flue gas 4 and consumption of pressurized air in the mammoth pump 52 can be kept at the lowest possible level. Basically a high concentration of sulphur dioxide in the flue gas 4 requires a thick layer 14, to obtain the necessary separation efficiency, while for a low concentration of sulphur dioxide it is sufficient with a thin layer 14. A high flue gas flow rate requires a high flow rate of the flowing layer 14 of the absorption liquid, to continuously feed fresh absorbent, while for a low flue gas flow rate a slower flow rate of the flowing layer 14 of the absorption liquid is sufficient. Table 1 below illustrates nonlimiting examples of combinations of thickness T, controlled by the level control means 74, and absorption liquid flow rate, controlled by the valve 62, that can be used for to operate the device 1 at four different combinations of flue gas flow rate and sulphur dioxide, SO₂, concentration:

**Table 1. Combinations of absorption liquid flow rate and thickness T of the layer 14 to meet different operating conditions regarding flue gas flow rate and sulphur dioxide concentration.**

| Flue gas flow rate | Concent. of SO2 | | Abs. liquid flow rate | Flowing layer thickness (T) |
|---|---|---|---|---|
| High | High | => | High | High |
| Low | High | => | Low | High |
| High | Low | => | High | Low |
| Low | Low | => | Low | Low |

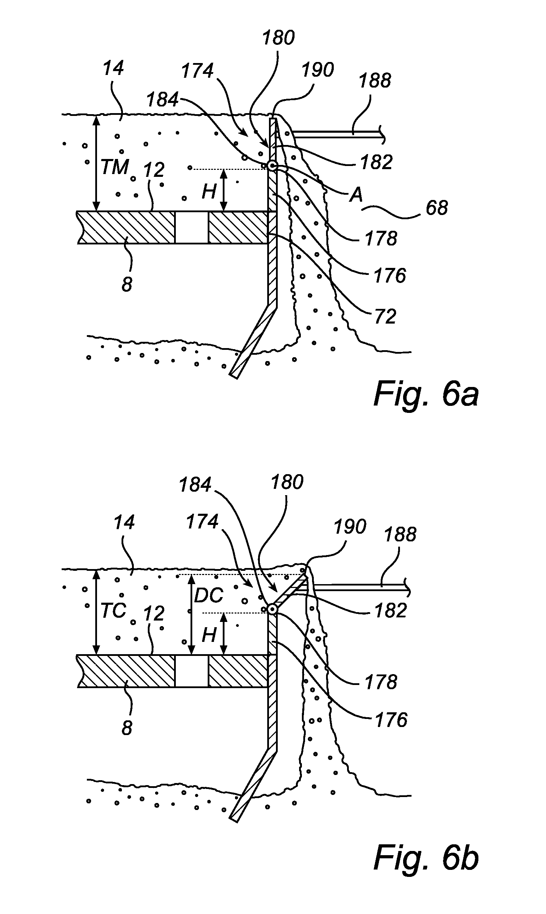

Fig. 6a shows a level control means 174 according to a second embodiment of the invention. The level control means 174 comprises a fixed barrier 176 which is shaped as a plate and is located at the outlet zone 68. The fixed barrier 176 extends vertically upwards from the apertured plate 8 at the third lateral edge 72 thereof and extends a height H above the upper surface 12 of the apertured plate 8. The height H of the fixed barrier 176 is preferably at least 50 mm, still more preferably about 75-350 mm. The fixed barrier 176 has an upper edge 178. The level control means 174 further comprises a controllable throttle means 180. The throttle means 180 comprises a throttle plate 182 which is fixed to a horizontal shaft 184. The shaft 184 is located on the upper edge 178 of the fixed barrier 176 and may be turned around a horizontal axis A. A throttle control motor, not shown in Fig. 6a, controls, via a control bar 188, the turning of the throttle plate 182. The throttle plate 182 has a horizontal upper edge 190 over which the absorption liquid may flow. In the situation shown in Fig. 6a the throttle plate 182 is in an upright position, i.e. the throttle plate 182 extends vertically upwards, which means that a layer 14 with a maximum thickness TM is obtained.

Fig. 6b illustrates the situation when the level control means 174 has been used to control the thickness of the layer 14 to a lower thickness TC. The degree of turning of the shaft 184 has been adjusted by means of the motor to set the distance DC from the upper surface 12 of the apertured plate 8 to the upper edge 190 of the throttle plate 182. The resistance, in the form of liquid height, that the flowing layer 14 of absorption liquid has to overcome in order to pass the fixed barrier 176 and the throttle plate 182 depends on the distance DC. By decreasing the distance DC, by turning the throttle plate 182, the resistance, i.e. the liquid height, will decrease and thus a lower thickness TC of the layer 14 is obtained. Thus it is possible to control the thickness TC of the flowing layer 14 of absorption liquid by setting the distance DC to the appropriate height. In the embodiment shown in Figs. 6a and 6b the throttle plate 182 is turned clockwise, i.e. away from the apertured plate 8, when the distance DC is to be decreased. It will be appreciated that it is, as an alternative, also possible to turn the throttle plate 182 in the other direction, counter-clockwise, i.e. towards the apertured plate 8, when the distance DC is to be decreased, starting from the position shown in Fig. 6a.

The level control means 174 illustrated in Fig. 6a and Fig. 6b has slower control characteristics than that shown in Fig. 5a and 5b. This is due to the fact that turning the throttle plate 182 for example 10° from the position shown in Fig. 6a results in a thickness TC which is just slightly lower than the maximum thickness TM. The level control means 174 is often useful in plants were quick load changes are not frequent and were a very accurate fine control of the thickness TC of the layer 14 is desired.

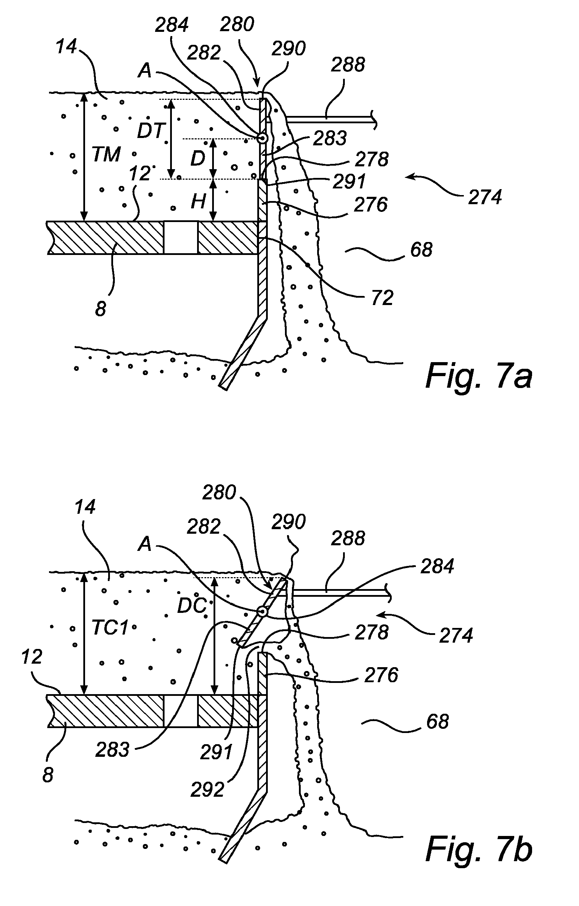

Fig. 7a shows a level control means 274 according to a third embodiment of the invention. The level control means 274 comprises a fixed barrier 276 which is shaped as a plate and is located at the outlet zone 68. The fixed barrier 276 extends vertically upwards from the apertured plate 8 at the third lateral edge 72 thereof and extends a height H above the upper surface 12 of the apertured plate 8. The height H of the fixed barrier 276 is preferably at least 50 mm, still more preferably about 75-350 mm. The fixed barrier 276 has an upper edge 278. The level control means 274 further comprises a controllable throttle means 280. The throttle means 280 comprises an upper throttle plate 282 and a lower throttle plate 283. The two throttle plates 282, 283 are fixed to opposite sides of a horizontal shaft 284 and thus extend in opposite directions. The shaft 284 is located vertically above the upper edge 278 of the fixed barrier 276 at a distance D from that edge 278 and may be turned around a horizontal axis A. A throttle control motor, not shown in Fig. 7a, controls, via a control bar 288, the turning of the throttle plates 282, 283. The upper throttle plate 282 has a horizontal upper edge 290 over which the absorption liquid may flow. In the situation shown in Fig. 7a the throttle plates 282, 283 are in an upright position, i.e. the throttle plates 282, 283 extend vertically upwards, which means that a layer 14 with a maximum thickness TM is obtained. The total vertical height DT of the throttle means 280 in this position, i.e. the distance DT from the upper edge 290 of the upper throttle plate 282 to a lower edge 291 of the lower throttle plate 283, is typically 100-500 mm. As shown in Fig. 7a the upper throttle plate 282 has the same vertical height as the lower throttle plate 283. This is, however, not necessary and the two throttle plates 282, 283 may, as alternative, have different vertical heights.

Fig. 7b illustrates the situation when the level control means 274 has been used to control the thickness of the layer 14 to a lower thickness TC1. The degree of turning of the shaft 284 has been adjusted by means of the motor to set the distance DC from the upper surface 12 of the apertured plate 8 to the upper edge 290 of the upper throttle plate 282. The resistance, in the form of liquid height, that the flowing layer 14 of absorption liquid has to overcome in order to pass the fixed barrier 276 and the throttle plates 282, 283 depends on the distance DC. By decreasing the distance DC, by turning the throttle plates 282, 283, the resistance, i.e. the liquid height, will decrease and thus a lower thickness TC1 of the layer 14 is obtained. Thus it is possible to control the thickness of the flowing layer 14 of absorption liquid by setting the distance DC to the appropriate height. As the throttle plates 282, 283 are turned around the horizontal axis A by means of the shaft 284 and the bar 288 a gap 292 will be generated between the lower edge 291 of the lower throttle plate 283 and the upper edge 278 of the fixed barrier 276. As is clear from Fig. 7b some of the absorption liquid will pass the fixed barrier 276 via this gap 292 and some of the liquid will pass over the upper edge 290 of the upper throttle plate 282.

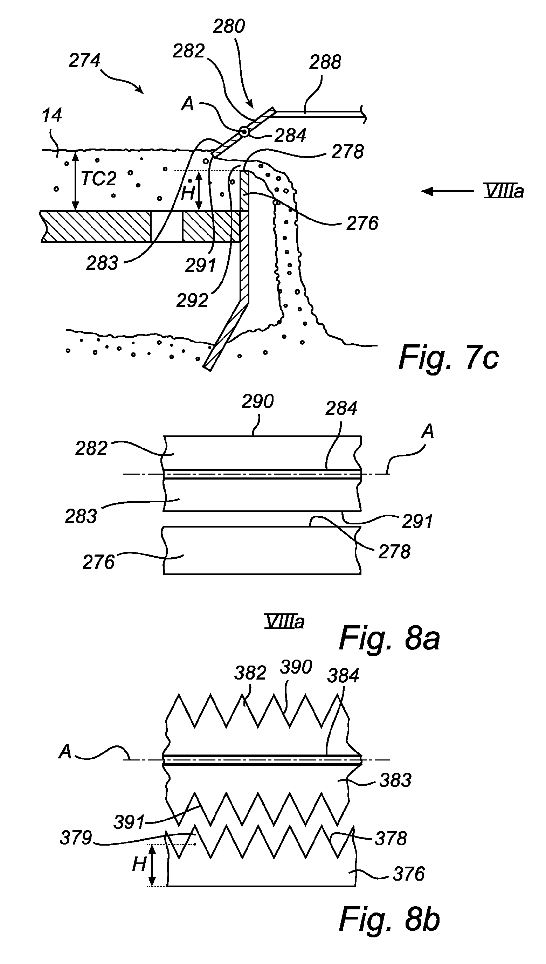

Fig. 7c illustrates the situation when the level control means 274 has been used to control the thickness of the layer 14 to an even lower thickness TC2. The degree of turning of the shaft 284 has been adjusted further by means of the motor and the bar 288. In the situation shown in Fig. 7c the resistance, in the form of liquid pressure drop, that the flowing layer 14 of absorption liquid has to overcome in order to pass the fixed barrier 276 is so low that the liquid flows entirely via the gap 292 formed between the upper edge 278 of the fixed barrier 276 and the lower edge 291 of the lower throttle plate 283.

The level control means 274 illustrated in Fig. 7a-7c has faster control characteristics than that shown in Fig. 5a and 5b. This is due to the fact that turning the throttle plates 282, 283 for example 10° from the position shown in Fig. 7a results in liquid flowing both over the upper edge 290 of the upper throttle plate 282 and also through the gap 292. Thus a small turning of the throttle plates 282, 283 results in a relatively large decrease in the thickness of the layer 14. The level control means 274 is often useful in plants were quick load changes are rather frequent and needs to be matched quickly by a comparably large change in the thickness of the layer 14.

Fig. 8a is a view of the throttle plates 282, 283 and the fixed barrier 276 as seen in the direction of the arrow VIIIa of Fig. 7c. For reasons of clarity the absorption liquid is not shown. As can be seen the upper edge 290 of the upper throttle plate 282, the lower edge 291 of the lower throttle plate 283, and the upper edge 278 of the fixed barrier 276 are all straight horizontal edges.

Fig. 8b is a view similar to that shown in Fig. 8a, but showing an alternative embodiment. In this embodiment an upper throttle plate 382 and a lower throttle plate 383 are attached to a horizontal shaft 384, which may be turned around a horizontal axis A. The horizontal shaft 384 is located vertically above a fixed barrier 376. The fixed barrier 376 has an upper edge 378 which is serrated. The lower throttle plate 383 has a lower edge 391 which is also serrated and in such a way that it matches the serration of the upper edge 378 of the fixed barrier 376. Thus, when the throttle plates 382, 383 are in their upright position, a tight seal can be achieved such that no, or at least only little, liquid may pass between the lower throttle plate 383 and the fixed barrier 376. The upper throttle plate 382 has an upper edge 390 which is also serrated. Edges over which liquid will flow and which are serrated often provides for a more even liquid flow seen along the horizontal length of the respective edge. The height H of the fixed barrier 376 is preferably at least 50 mm, preferably 75-350 mm. As indicated in Fig. 8b the height H of the fixed barrier 376 is measured from a point corresponding to half the vertical height of an individual tooth 379 and down to the upper surface of the apertured plate (not shown in Fib 8b).

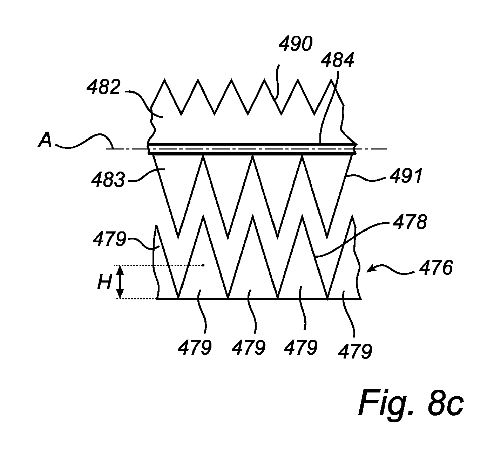

Fig. 8c is a view similar to that shown in Figs. 8a and 8b, but showing yet another alternative embodiment. In this embodiment an upper throttle plate 482 and a lower throttle plate 483 are attached to a horizontal shaft 484, which may be turned around a horizontal axis A. The horizontal shaft 484 is located vertically above a fixed barrier 476. The fixed barrier 476 has an upper edge 478 which is serrated and has teeth 479 that extend all the way from the upper surface of the apertured plate (not shown in Fig. 8c). The lower throttle plate 483 has a lower edge 491 which is also serrated and in such a way that it matches the serration of the fixed barrier 476. Thus, when the throttle plates 482, 483 are in their upright position, a tight seal can be achieved such that no, or at least only little, liquid may pass between the lower throttle plate 483 and the fixed barrier 476. The upper throttle plate 482 has an upper edge 490 which is also serrated, but with another pattern than the lower throttle plate 483. The vertical height H of the fixed barrier 476 is at least 50 mm, preferably 75-350 mm. As indicated in Fig. 8c the height H of the fixed barrier 476 is measured from a point corresponding to half the vertical height of an individual tooth 479 and down to the upper surface of the apertured plate. It will be appreciated that the fixed barrier 476 will allow some absorption liquid to slip between the teeth 479, also at very low liquid heights, but will still work as a fixed barrier since larger amounts of absorption liquid cannot pass between the teeth.

It will be appreciated that numerous variants of the above described embodiments are possible within the scope of the appended claims.

For instance it has been described above that the fixed barrier is plate shaped. It will be appreciated that the barrier may also have other cross-sectional shapes, such as rectangular, triangular etc. A plate shaped fixed barrier, optionally with reinforcing stiffeners, is often the preferred alternative due to minimum space requirements.

Above a throttle means comprising a horizontal shaft and at least one throttle plate has been described. It will be appreciated that other types of throttle means could also be used, such as throttle means where a shaft in itself is not round, but works as a throttle.

A further alternative is to form a throttle means which comprises a sliding throttle plate which slides, in a vertical direction, along the fixed barrier. In this alternative no shaft is required. The sliding throttle plate comprises a horizontal upper edge over which the absorption liquid is adapted to flow. By controlling the vertical distance from the horizontal upper edge of the sliding throttle plate to a horizontal upper edge of the fixed barrier the thickness of the flowing layer of absorption liquid can be controlled. The sliding throttle plate could be moved in the vertical direction by means of hydraulic jacks or linear motors.

The device 1 shown in Figs 1-8 has a rectangular apertured plate. It will be appreciated that, as alternative, the apertured plate could also be circle-shaped or sector shaped, as is for instance shown in WO 96/00122. In such a case the throttle means may be divided into short segments, each segment being straight as seen from above, to fit to the bent shape of the outer edge of such a circle-shaped apertured plate.

Above it is described that a bar 88 and a motor 86 are used for controlling the setting of the throttle plate 82. It will be appreciated that it is also possible to instead mount a motor such that it drives, directly or via a transmission, the shaft 84 itself. In such case no linkage may be required.

Above several different variants of fixed barriers have been described, see for instance Fig. 8a, 8b and 8c. It should be appreciated that these embodiments are examples and that many variations are possible regarding the detailed design. In many cases it is preferable that the fixed barrier comprises a completely tight horizontal portion, like it is shown in Fig 8a and Fig. 8b, the portion under the teeth 379 of Fig 8b being that horizontal portion, but it may in some cases also be preferable to have teeth extending all the way down to the upper surface 12 of the apertured plate 8, like it is shown in Fig. 8c.

Above it has been described that a gaseous pollutant in the form of sulphur dioxide is separated from a gas. For this separation an absorption liquid being an aqueous suspension of for example lime, limestone or dolomite may be used. It will be appreciated that also other gaseous pollutants could be removed from a gas by means of the method and device according to the present invention. Examples of such gaseous pollutants include hydrochloric acid (HCl), hydrofluoric acid (HF), bromine (Br₂) and hydrobromic acid (HBr). These gaseous pollutants may be separated in separate devices or jointly in one device, even together with sulphur dioxide. In some cases water only or an aqueous solution of a soluble absorbent, such as sodium hydroxide or sodium carbonate, may be useful as an absorption liquid. Further the device and method according to the invention may also be used for separating carbon dioxide as a gaseous pollutant from a gas. For separating carbon dioxide from a gas it may be useful to use an organic liquid, such as an amine, as absorption liquid instead of an aqueous absorption liquid.

## Claims

1. A device for separating gaseous pollutants, such as sulphur dioxide, from a gas by means of an absorption liquid, said device comprising
a) an inlet (2) for gas (4) containing at least one gaseous pollutant and an outlet (18) for gas (16), from which said at least one gaseous pollutant has been separated,
b) an essentially horizontal apertured plate (8) which is mounted between the inlet (2) and the outlet (18) and which is arranged to allow passage from below of gas (4) containing said at least one gaseous pollutant and to carry, on its upper surface (12), a flowing layer (14) of the absorption liquid,
c) an inlet zone (64), which is adapted for distributing absorption liquid over the apertured plate (8) to form the flowing layer (14) of the absorption liquid, and
d) an outlet zone (68), which is adapted to receive the flowing layer (14) of the absorption liquid after it has passed over the apertured plate (8),
**characterised in that** the device further comprises
e) a fixed barrier (76) located at the outlet zone (68) and extending vertically upwards from the apertured plate (8), and
f) a controllable throttle means (80) located above said fixed barrier (76) and adapted to control the resistance which the flowing layer (14) of the absorption liquid has to overcome in order to pass the fixed barrier (76).

2. A device according to claim 1, wherein the fixed barrier (76) is shaped as a plate extending vertically upwards from an edge (72) of the apertured plate (8).

3. A device according to any one of claims 1-2, wherein the fixed barrier (76) extends to a height (H) of at least 50 mm above the upper surface (12) of the apertured plate (8).

4. A device according to any one of claims 1-3, wherein the throttle means (80; 180; 280) comprises a throttle plate (82; 182; 282, 283) which is adapted to be turned around a horizontal axis (A).

5. A device according to claim 4, wherein said horizontal axis (A) is located at a distance (D) from an upper edge (78; 278) of the fixed barrier (76; 276), opening of the throttle plate (82; 283) resulting in forming a gap (92; 292) between the upper edge (78; 278) of the fixed barrier (76; 276) and the throttle plate (82; 283).

6. A device according to claim 5, wherein said horizontal axis (A) is located vertically above the upper edge (78; 278) of the fixed barrier (76; 276).

7. A device according to claim 4, wherein said horizontal axis (A) is located on an upper edge (178) of the fixed barrier (176).

8. A device according to any one of claims 4-7, wherein the throttle plate (82; 182; 282, 283; 382, 383; 482, 483) is provided with a horizontal edge (90; 190; 290, 291; 390, 391; 490, 491) over which the absorption liquid is adapted to flow, the horizontal edge being selected among straight edges (90; 190; 290, 291) and toothed edges (390, 391; 490, 491).

9. A device according to any one of claims 1-8, wherein the fixed barrier (76; 276; 376; 476) is provided with an upper edge (78; 278; 378; 478), over which the absorption liquid is adapted to flow, the upper edge being selected among straight edges (78; 278) and toothed edges (378; 478).

10. A method of separating at least one gaseous pollutant, such as sulphur dioxide, from a gas by means of an absorption liquid, in which method the gas (4) is conveyed upwards through a substantially horizontal apertured plate (8) on which a flowing layer (14) of the absorption liquid is conveyed from an inlet zone (64) to an outlet zone (68),
**characterised in that** the flowing layer (14) of the absorption liquid passes a fixed barrier (76) which is provided at the outlet zone (68) and extends vertically upwards from the apertured plate (8), the separation of said at least one gaseous pollutant being controlled by adjusting the thickness (T) of the flowing layer (14) of the absorption liquid by setting a throttle means (80), which is located above said fixed barrier (76), to a position that provides a suitable resistance which the flowing layer (14) of the absorption liquid has to overcome in order to pass the fixed barrier (76).

11. A method according to claim 10, wherein the separation of said at least one gaseous pollutant is further controlled by controlling the liquid flow rate at which the absorption liquid is passed over the upper surface (12) of the apertured plate (8).
